Europäisches Patentamt

**European Patent Office**

**Office européen des brevets**

(19)

(11) Numéro de publication: **0 004 231**
**B1**

(12) **FASCICULE DE BREVET EUROPEEN**

(45) Date de publication du fascicule du brevet: **09.02.83**

(21) Numéro de dépôt: **79400131.3**

(22) Date de dépôt: **01.03.79**

(51) Int. Cl.³: **A 23 C 9/14,** A 23 J 1/20, A 23 C 21/00, C 07 G 7/00

(54) Procédé et installation d'acidulation du lait, notamment pour la préparation de la caséine et lactosérum obtenu.

(30) Priorité: **02.03.78 FR 7806006**

(43) Date de publication de la demande:
**19.09.79 Bulletin 79/19**

(45) Mention de la délivrance du brevet:
**09.02.83 Bulletin 83/6**

(84) Etats contractants désignés:
**BE CH DE GB IT NL SE**

(56) Documents cités:
**DE - B - 1 270 938**
**FR - A - 1 469 793**
**FR - A - 2 331 963**
**US - A - 2 477 588**
**US - A - 3 615 664**

**CHEMICAL ABSTRACTS, vol. 60, column 6135h (1964) Columbus, Ohio, USA K. M. OL'SHANOVA: "Changes in the salt content and acidity of milk by the use of ion exchange resins"**
**CHEMICAL ABSTRACTS, vol. 64, col. 14864h— 14865b (1966) Columbus, Ohio, USA K. OL'SHANOVA: "Ion-exchange processes in dairying"**

(73) Titulaire: **LAITERIES HUBERT TRIBALLAT Rians**
**F-18220 Les Aix D'Angillon (FR)**

(72) Inventeur: **Salmon, Michel Charles Jean**
**8 rue de la Carolerie**
**F-18000 Sancergues (FR)**

(74) Mandataire: **Flechner, Willy**
**CABINET FLECHNER 22, Avenue de Friedland**
**F-75008 Paris (FR)**

(56) Documents cités:
**FOOD TECHNOLOGY, vol. 23, février 1969, S. WEISBERG et al. "Whey for foods & feeds", pages 186—190**
**JOURNAL OF DAIRY SCIENCE, vol. 60, no. 2, 1977, L. GLASS et al. "Nutritional composition of sweet- and acid-type dry wheys", pages 185—196**
**C. CALMON et al. "Ion Exchangers in organic and biochemistry". 1957, Interscience Publishers, New York, US & BENSON R.E. Iowa State Coll., J. Sci, 16, 28 (1941).**

# 0 004 231

## Procédé et installation d'acidulation du lait, notamment pour la préparation de la caséine et lactosérum obtenu

La présente invention se rapporte au traitement du lait et des matières lactiques. Plus particulièrement, l'invention a trait aux procédés d'acidulation du lait, aux installations prévues à cet effet et aux produits résultant de ces traitements.

En écrémant du lait entier, on obtient du lait écrémé ayant un pH compris entre 6,6 et 6,8 environ. C'est un mélange d'une phase aqueuse et d'une phase colloïdale. La phase aqueuse renferme du lactose, des vitamines hydrosolubles, des sels minéraux en solution et les protéines du sérum. L'azote protidique, qui représente 95% environ de l'azote total, comprend de la caséine, pour environ 78% en poids, des protéines du sérum, pour environ 16% en poids, et 1% de protéines mineures, telles que la lactotransferrine, la lactolline, les membranes des globules gras, les enzymes. Les protéines du sérum sont notamment les protéoses peptones (4 à 6%) thermostables et les albumines et globulines, thermolabiles, telles que les B lactoglobulines (de 5 à 7% environ) les $\alpha$-lactalbumines (1 à 3% environ); les sérum albumines (0,5% à 1,5% environ) et les immunoglobulines (2 à 4% environ). La caséine, dont la teneur moyenne dans le lait de vache est de 27 grammes par litre environ comprend les $\alpha$-caséines (45%), notamment 1'$\alpha_{s_1}$ caséine et les K-caséines (15%) notamment le para K caséine (9%) et les glycopeptides (3%), ainsi que de la B-caséine et de la caséine.

La caséine entière est le complexe protéique qui est précipité du lait à pH 4,6. Ce complexe est également appelé isoélectrique (ou caséine de Hammarsten). La caséine a de multiples usages, notamment dans l'industrie alimentaire et dans l'industrie des adhésifs.

On caractérise le caséine par son procédé de préparation et l'on distingue notamment la caséine lactique et la caséine chlorhydrique.

Pour préparer la caséine lactique, on fait fermenter spontanément le lait. L'acidité est poretée à 90° Dornic environ (10° Dornic correspondent à 1 ml de soude normale par gramme). On a proposé aussi d'additionner le lait de ferments acidulants, tels que Str. Cremoris, Str. Lactis, pour atteindre un pH de 4,5 en une douzaine d'heures.

Le grave inconvénient de la caséine lactique est la nécessité d'entreposer des volumes importants pour la fermentation pendant des durées prolongées.

Pour y remédier, on a proposé l'action brutale de l'acide chlorhydrique dont l'addition permet d'abaisser rapidement le pH du lait écrémé jusqu'au point de floculation de la caséine. On lave ensuite la caillebotte formée pour en diminuer l'acidité, la teneur en lactose et la teneur en matières minérales, de façon à obtenir une caséine répondant aux normes alimentaires internationales suivantes:

| | |
|---|---|
| Protéines (sur sec) | 95% |
| Matières Minérales (sur sec), $P_2O_5$ inclus | 2,5% |
| Matières grasses | 1,5% |
| Humidité | 10% maxi |
| Acidité libre | 0,15% maxi |
| Sédiments | B maxi |

La caséine lavée est ensuite pressée sur un décanteur horizontal pour enlever au maximum l'eau libre de la caillebotte (extrait sec de 45 à 50% en poids) et entrée sur un séchoir. Pour obtenir un bon séchage, la caillebotte pressée, qui se présente sous la forme d'un gâteau, doit être granulée. Le séchage s'effectue généralement sur un séchoir à lit fluidisé.

Dans la fabrication d'une caséine acide, on abaisse le pH du lait jusqu'à son point isoélectrique par ajout d'un acide fort (chlorhydrique, sulfurique, nitrique, lactique, etc.). On augmente donc la concentration en ions $H^+$ du lait, mais on augmente également la teneur en chlorures, sulfates, nitrates our lactates.

Si les cations $H^+$ sont nécessaires au procédé pour abaisser le pH, les anions en revanche sont néfastes et n'apportent rien si ce n'est une charge minérale importante. Ces minéraux supplémentaires se retrouvent au stade final dans la caillebotte avant lavage et dans le lactosérum.

Si l'on veut utiliser le lactosérum issu d'une fabrication de caséine chlorhydrique, il est indispensable de le retravailler en déminéralisation pour ressortir ces minéraux excédentaires.

Un lactosérum de caséine chlorhydrique contient de 12 à 14% en poids de matières minérales par rapport à l'extrait sec et environ 7 à 8% en poids, voire plus de chlorures.

Les procédés antérieurs présentent donc deux inconvénients principaux, d'une part le traitement brutal par un acide fort peut dénaturer ou dégrader certains produits précieux contenus dans le lait écrémé à traiter, et d'autre part ces procédés chargent les produits du traitement de matières minérales inutiles ou même nuisibles, dont il faut alors les débarrasser, au moins partiellement, par des traitements subséquents longs et coûteux.

On a déjà proposé de faire appel à des résines échangeuses d'ions pour l'obtention de la caséine du lait. Au brevet allemand 1 270 938, on propose un traitement par des résines sous forme Na pour échanger le calcium. Au brevet français 1 469 793, on propose d'abaisser le pH du lait écrémé par addition de petit-lait (lactosérum) dont le pH a été abaissé par échange d'ions à l'aide de résine sous

2

forme H. Ce procédé met en oeuvre une concentration du petit-lait à 60—65%, une cristallisation, une séparation du lactose, une dilution par du petit-lait doux et un chauffage, le tout indépendamment de l'opération de coagulation proprement dite du lait. Il est compliqué. Il est onéreux. Le lait traité conserve en grande partie ses matières minérales qui se retrouvent dans le lactosérum. Le procédé se garde bien de proposer de faire passer du lait directement sur une résine échangeuse sous forme H⁺ pour les raisons clairement indiquées au brevet américain 2 477 588, page 5, lignes 22 et suivantes: "L'utilisation de lait écrémé n'est pas des plus satisfaisantes, parce qu'il se produit une coagulation excessive des protéines dans le lit de l'échangeur...". Et, de ce fait, le lait coagule sur le lit et on obtient une mixture solide, impropre à tout usage, constituée de billes de résine prises dans une matière coagulée. C'est pourquoi le brevet français 2 331 963 reprend la technique antérieure d'aciduler à l'aide d'une résine, non le lait lui-même, mais le lactosérum avec les inconvénients de complexité et de coût déjà mentionnés.

Aux CHEMICAL ABSTRACTS, vol. 60, colonne 6135h (1964), on mentionne l'utilisation de résines échangeuses d'ion pour aciduler du lait, notamment de résines cationiques. Les résines cationiques diminuent la teneur du lait en Ca et Mg mais augmentent celles en Na et K. C'est souligner qu'elles sont sous forme Na ou K. On ne propose pas en outre un procédé de coagulation du lait, puisqu'on mentionne justement que la coagulation ne se produit pas. Ce sont aussi des essais de laboratoires qui sont rapportés aux CHEMICAL ABSTRACTS vol. 64, colonne 14864h—14865b (1966). On y propose de traiter du lait par un échangeur de cation sous forme H et, plus particulièrement, de diminuer la durée de caillage spontané du lait par un traitement préliminaire sur résine échangeuse sous forme H. Aucun renseignement n'est donné sur la manière de procéder à ce traitement préalable, pourtant si difficile à effectuer industriellement comme le prouve le brevet des E.U.A. 2 477 588.

L'invention remédie à ces inconvénients par une acidulation ménagée du lait écrémé, sans apport d'anions inutiles pouvant faire l'objet d'une application industrielle à grande échelle et permettant d'économiser de l'acide.

La Demanderesse a repris en effet l'idée d'aciduler le lait en le mettant en contact avec de la résine cationique sous forme H⁺. La résine échange ses cations H⁺ avec les cations des métaux du lait. Il n'y a pas ainsi de charge d'anions.

Mais en adoptant cette technique, on se heurte aux difficultés déjà mentionnées. Si l'on ne prend aucune précaution, le pH local de la partie du lait écrémé qui est au contact d'une bille ou d'une particule de résine cationique s'abaisse trop rapidement. Cette partie coagule immédiatement sur la bille. Pour un fonctionnement industriel, il convient donc, d'une part, de prendre des mesures pour n'effectuer, par la résine, que le premier stade d'acidulation, par exemple jusqu'à obtention d'un pH non inférieur à celui où se produit la floculation du lait écrémé, par exemple non inférieur à 4,7 et notamment compris entre 4,9 et 5,0, de manière à éviter l'emprisonnement des résines par la caséine floculée, et d'autre part, d'éviter un contact prolongé entre une bille de résine et la même partie du lait écrémé. C'est pourquoi il est bon de maintenir le lait écrémé et la résine cationique en mouvement relatif pendant leur mise en contact, notamment en maintenant les billes de résine en suspension dans le lait écrémé par une agitation continue donnée à celui-ci.

Ce premier stade effectué, on sépare le lait écrémé acidulé des billes de résine et l'on termine l'acidulation par un acide dilué, par exemple par HCl dilué, jusqu'à obtention d'un pH de 4,6 environ. On termine ensuite à la manière classique par séparation de la caillebotte et du sérum, et par lavage, pressage et séchage de la caséine.

Le premier stade d'acidulation suivant l'invention s'effectue en mettant le lait, notamment le lait écrémé, en contact avec des résines cationiques sous forme H.

Comme résine, on peut utiliser des résines cationiques classiques, par exemple sous les marques Amberlite de Rohm & Haas, Duolite de Diamond Alkali Co., Kastel, Couvex (copolymères de styrène et de divinylbenzène à groupes fonctionnels d'échange), Lewalit, Relite, Zerolit etc.

Compte tenu des contraintes mécaniques que subissent les résines, on préfère celles de type macroporeux, plus résistantes, à celles de type gel (Lewatit S100 ou Duolite C20).

Il est bon pour la mise en suspension que la densité de la résine soit voisine de celle du lait, par exemple d'environ 1,035. La dimension des billes est comprise, de préférence, entre 0,5 et 1 mm environ. Il est important que le calibre des billes soit uniforme pour assurer une répartition bien uniforme des billes dans le lait écrémé et éviter toute coagulation locale sur une bille trop lourde ou trop légère pour être déplacée par agitation de la suspension. Une bille trop légère resterait à la surface de la suspension. Comme il faut séparer ensuite les billes du lait, on préfère que les billes aient une dimension suffisante pour être refusées par un tamis de séparation.

Le rapport du poids de lait écrémé au poids des billes peut varier beaucoup suivant la durée du traitement et l'agitation de la suspension. Ce rapport est d'autant plus petit que la durée est plus brève et que l'agitation est moindre. En général, ce rapport est compris entre 1/6 et 1/20. On a obtenu par exemple de bons résultats avec 80 à 100 ml de résines pour 1 litre de lait, en agitant pendant 3 à 5 minutes avec un agitateur magnétique. Le cas échéant, on peut compléter l'agitation par un jet d'air à la surface de la suspension, envoyé par intermittence pour éviter tout moussage, notamment dans le cas de cuve de grande capacité. En général, des durées de 1 à 30 minutes conviennent bien.

3

On a obtenu des résultats satisfaisants en opérant entre 4 et 50°C. Les essais de laboratoire effectués à 4°C, 10°C, 20°C, 40°C, 50°C et 70°C se sont révélés corrects. Mais au-dessus de 50°C, on peut dénaturer certaines protéines fragiles, tandis qu'il est rare d'avoir du lait à une température inférieure à 4°C.

L'invention vise également une installation pour la mise en oeuvre du procédé, qui comprend un récipient de réception du lait et de la résine cationique, des moyens pour maintenir le lait et la résine cationique en mouvement relatif dans le récipient et un pH mètre, caractérisé par des moyens, commandés par le pH mètre, pour enlever sélectivement le lait ou la résine lorsque le pH du lait atteint une valeur donnée.

De préférence, les dits moyens d'enlèvement sélectif sont constitués par le fait que la résine, sous forme de billes, est dans un panier dont les ouvertures de maille sont inférieures aux dimensions des billes et par un dispositif pour sortir le panier du récipient.

En caséinerie classique acide, le sérum obtenu est très fortement acide et minéralisé.

Un sérum de caséine chlorhydrique contient de 12 à 14% de matières minérales, dont 7 à 8% de chlorures exprimés en chlorure de sodium. L'acidité est comprise entre 50 et 60° Dornic.

Le procédé d'acidulation du lait par résines permet d'obtenir un sérum avec un taux de minéraux beaucoup plus faible de 7 à 8% (dont 3 à 4% de chlorures). Ce sérum est en plus partiellement décationné. Le sodium, le potassium et le calcium ont participé en partie à la réaction d'échange avec les ions $H^+$ de la résine.

Le lactosérum suivant l'invention a une proportion pondérale de matière minérale inférieure à 10% et, mieux, inférieure à 8%, et un taux d'alcalinité des cendres inférieur à 750 et mieux inférieur à 500, exprimé en mg de $Na_2CO_3$ par gramme de cendres.

La caséine obtenue est elle aussi nouvelle. Elle est d'excellente qualité, de structure plus aérée et plus ferme, également plus blanche et n'ayant pas subi une adjonction violente d'acide et possède des propriétés intéressantes.

Le lactosérum, obtenu par mise du lait écrémé en contact avec une résione cationique, se distingue d'un lactosérum classique de caséine chlorhydrique principalement par un taux global de matières minérales plus faible de 8 à 9% au lieu de 11 à 14% et une teneur en chlorure, exprimée en NaCl, beaucoup plus faible, inférieure à 3,5% au lieu de 6 à 8%, et des teneurs en sodium, potassium et calcium plus faibles.

L'invention a donc pour objet un lactosérum caractérisé par une proportion pondérale de matières minérales inférieure à 9% et par une proportion pondérale en chlorures, exprimée en NaCl, inférieure à 3,5%.

Les proportions pondérales en sodium et potassium sont inférieures respectivement à 1,0% et 3% et celle en calcium est comprise entre 1,5 et 2%. Bien que ces trois dernières plages chevauchent celles d'un lactosérum chlorhydrique, les teneurs sont basses, de sorte que la proportion pondérale de l'ensemble sodium, potassium et calcium est inférieure à 5%, ce qui n'est pas le cas pour un lactosérum chlorhydrique.

On donne ci-dessous, à titre comparatif, des résultats d'analyses effectuées sur plusieurs sérums provenant de processus de préparation de caséine par la voie chlorhydrique et par acidulation par une résine cationique. Les gammes indiquées correspondent aux variations de composition du lait initial en fonction de la race des bêtes, de la région et de la saison.

1) Composition d'un lactosérum de caséine chlorhydrique classique.

| | |
|---|---|
| — Acidité | de 40 à 50° Dornic |
| — pH | de 4 à 4,4 |
| — Matières minérales (en % sur sec) | de 11 à 14% |
| — Alcalinité des cendres | <300 mg $Na_2CO_3$ |
| — Chlorures (exprimés en NaCl) | de 6 à 8% |
| — Sodium | de 0,7 à 1,2% |
| — Potassium | de 2,4 à 3% |
| — Calcium | de 1,7 à 2,2%. |

2) Composition d'un lactosérum de caséine suivant l'invention.

| | |
|---|---|
| — Acidité | <40° Dornic |
| — pH | de 4,2 à 4,4 |
| — Matières minérales | de 8 à 9% |
| — Alcalinité des cendres | <300 mg $Na_2CO_3$ |
| — Chlorures (en NaCl) | <3,5% |
| — Sodium | <1,0% |
| — Potassium | <3,0% |
| — Calcium | 1,5 à 2%. |

**0 004 231**

Pour un lait ayant une composition saline donnée, l'acidification pour les résines permet d'obtenir un lactosérum ayant:

— un taux global de matières minérales beaucoup plus faible;
— une acidité plus faible;
— une teneur beaucoup plus faible en chlorures;
— une teneur en Na, K et Ca plus faible, puisque lors de l'échange en ions $H^+$ pour l'acidification le lait a perdu du sodium, du potassium et du calcium qui se sont fixés sur la résine.

L'invention a aussi pour objet un procédé de préparation de caséine à partir du lait écrémé qui consiste à mettre du lait écrémé en contact, sous agitation, avec une résine cationique sous forme H pendant une durée permettant d'obtenir du lait, à un pH supérieur à 4,7 mais inférieur au pH du lait initial et de la résine saturée par des ions métalliques, à séparer le lait obtenu de la résine saturée à coaguler le lait séparé pour obtenir de la caillebotte et du sérum que l'on sépare, caractérisé en ce qu'il consiste à régénérer de la résine saturée par du sérum séparé.

De préférence, on concentre le sérum avant de l'utiliser pour la régénération. On peut aussi utiliser du sérum concentré pour finir la coagulation ou floculation, à la place de l'acide habituellement utilisé.

On comprend que toutes ces mesures permettent de diminuer la quantité d'acide chlorhydrique qui est nécessaire à l'installation et de réaliser des économies importantes sur les coûts opératoires pour des dépenses d'investissement réduites au minimum, puisqu'elles se réduisent à des tuyauteries et, le cas échéant, à un évaporateur-concentrateur.

Le premier stade du procédé de préparation de caséine suivant l'invention consiste à mettre du lait écrémé en contact sous agitation, avec une résine cationique sous forme H pendant une durée permettant d'obtenir du lait à un pH supérieur à 4,7, mais inférieur au pH du lait initial comme décrit précédemment.

Le second stade du procédé suivant l'invention consiste à séparer le lait obtenu, dont le pH a donc été abaissé mais reste encore supérieur au point de floculation, de la résine saturée par des ions métalliques. On peut effectuer très simplement cette séparation sur un tamis incliné, le reflux du tamis représenté par les résines glissant sur le flanc incliné et étant repris par un transporteur, pour être renvoyé vers un réservoir de résines à régénérer, tandis que le lait déjà acidulé est repris par une pompe pour être envoyé en général à un stockage intermédiaire, avant d'être réchauffé, dégazé et coagulé dans un tube de coagulation où s'effectue le troisième stade du procédé suivant l'invention.

Le quatrième stade du procédé suivant l'invention consiste à sépare la caille botte ou matière solide formée lors de la coagulation du sérum liquide. Là encore, on peut utiliser un tamis incliné, permettant de faire tomber la caillebotte dans un bac de dilution de caillebotte avant que celle-ci aille à une tour de lavage, à un décanteur et à un séchoir classique en caséinerie, tandis que, conformément à l'invention, on retourne le sérum, le cas échéant après évaporation, au réservoir où se trouve la résine à régénérer, utilisant donc ainsi l'acidité résiduelle du sérum à des fins utiles. Le cas échéant, on peut utiliser aussi cette acidité du sérum pour remplacer en tout ou partie l'acide nécessaire à l'achèvement de la coagulation dans le tube de coagulation.

L'invention a également pour objet une installation de préparation de caséine comprenant d'amont en aval chaque appareillage communiquant avec l'appareillage précédent, un récipient, équipé d'un agitateur, d'acidulation du lait écrémé par de la résine, un tamis séparant du lait acidulé de la résine saturée et un tube de coagulation du lait acidulé, caractérisée par un séparateur, en aval du tube, de la caillebotte et du sérum formés dans le tube de coagulation, par deux réservoirs de résine, montés en parallèle et communiquant, en alternance avec le récipient, par un moyen pour charger la résine saturée provenant du tamis et par un conduit, reliant le côté sérum du séparateur alternativement à l'un et à l'autre réservoir.

Aux dessins annexés donné uniquement à titre d'exemple, les figures 1 et 2 sont des schémas de deux installations pour la mise en oeuvre du procédé suivant l'invention, et la figure 3 est un schéma d'une caséinerie.

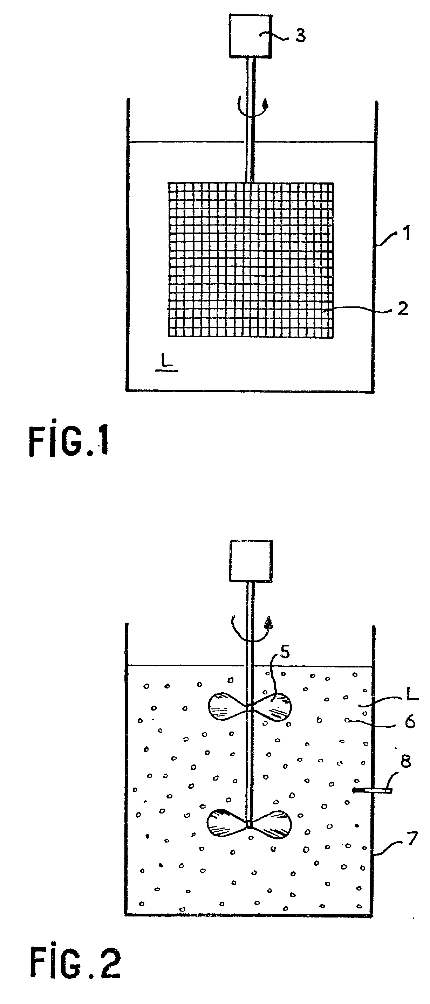

A la figure 1, du lait L écrémé est placé dans un récipient 1. Un panier 2, empli de billes de résine de dimensions supérieures à l'ouverture de maille du panier, est agité dans le récipient 1. Lorsqu'un pH mètre indique une certaine valeur du pH, le panier 2 est retiré du récipient 1 à l'aide d'un palan 3.

A la figure 2, un agitateur 5 à double jupe met des billes 6 de résine cationique en suspension dans du lait L écrémé contenu dans un récipient 7. Lorsqu'un pH mètre 8 indique que le lait L a un pH de 4,9, on fait sortir le lait L du récipient 7 en rétenant les billes 6.

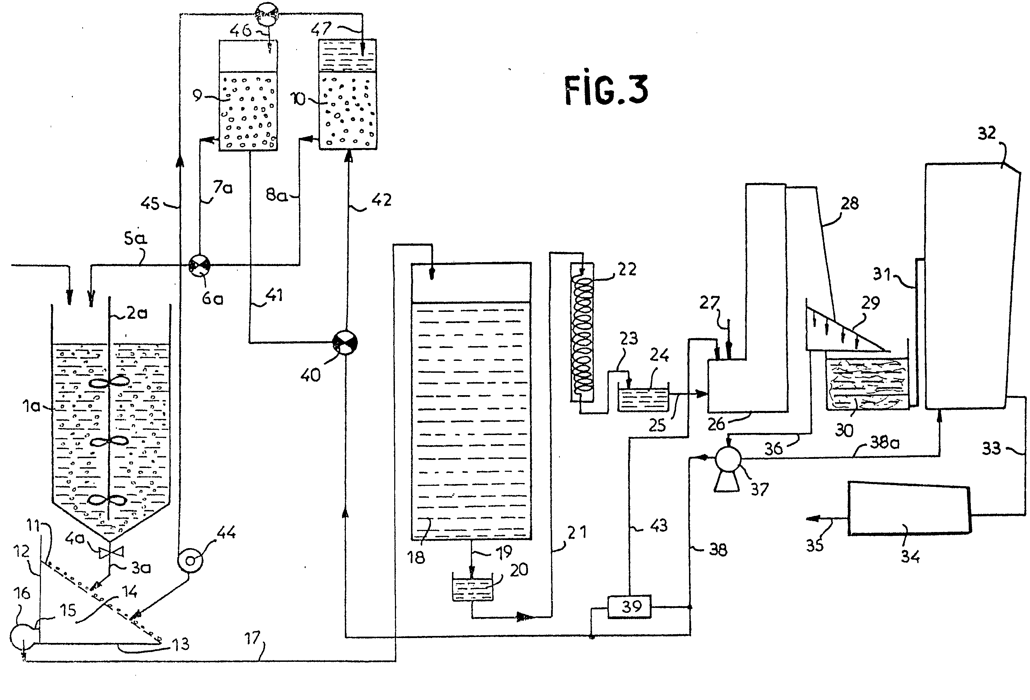

L'installation de caséinerie de la figure 3 comprend un récipient $1_a$ muni d'un agitateur $2_a$, ouvert vers le haut, et du bas duquel part un conduit $3_a$ sur lequel se trouve une vanne $4_a$ de fermeture. Un conduit $5_a$ débouchant au sommet du récipient $1_a$ comporte une vanne $6_a$ à deux voies permettant de mettre le conduit $5_a$ en communication avec une branche $7_a$ ou une branche $8_a$. L'autre extrémité de la branche $7_a$ débouche au bas d'un réservoir 9 pour de la résine cationique. L'autre extrémité de la branche $8_a$ débouche au bas d'un réservoir 10 pour de la résine cationique.

Le conduit $3_a$ débouche au-dessus d'un tamis 11 incliné dont la paroi latérale 12 et le fond 13 du support forment chambre 14 de récupération du lait liquide dont le pH est par exemple de 5,0. Par un

5

conduit 15, débouchant au bas de la chambre 14, et par une pompe 16, ce lait déjà acidulé est envoyé par l'intermédiare d'un conduit 17, à un bac 18 de stockage. Du bas de ce bac de stockage, le lait peut passer par un conduit 19 muni d'une vanne dans un bac 20 de lancement de la chaîne de caillage. Du bas de ce bac 20, part un conduit 21 qui débouche au sommet 22 d'un dispositif classique de réchauffage du lait. Par un conduit 23, issu du bas du dispositif 22, le lait est envoyé à un dispositif 24 de dégazage puis, de ce dernier, par un conduit 25 au bas d'un tube 26 de coagulation pouvant recevoir, par un conduit 27, de l'acide notamment chlorhydrique destiné à finir la coagulation.

Du sommet du tube 26 de coagulation s'écoule par un conduit 28 un mélange de caillebotte et de sérum. Ce mélange tombe sur un tamis 29 de même constitution que le tamis 11.

La caillebotte solide tombe dans un bac 30 de dilution pour aller, par un conduit 31, à une tour de lavage 32, puis par un conduit 33, à un décanteur horizontal 34, avant d'aller par un conduit 35, à un séchoir non représenté.

Le sérum, qui a traversé le crible 29 et qui, en fait, est un mélange de sérum et de fines passe par un conduit 36 dans un séparateur 37 des fines. Les fines de caséine séparées sont envoyées par un conduit 38a au bas de la tour 32 de lavage. Le sérum débarrassé des fines sort du séparateur 37 par un conduit 38 et va, avec possibilité de concentration intermédiaire dans un évaporateur 39, par l'intermédiaire d'une vanne 40 à double voie, soit à la cuve 9 par un conduit 41, soit à la cuve 10 par un conduit 42.

Du concentrateur 39 part un conduit de dérivation 43, qui débouche au début du tube 26 de coagulation ou dans le tube 27 d'alimentation en acide.

L'installation fonctionne de la manière suivante. On charge du lait écrémé dans le récipient $1_a$, alors que le réservoir 9 est plein de résine sous forme H et que le réservoir 10 est plein de résine saturée par des ions métalliques. La vanne 6 est fermée. On met en communication le récipient $1_a$ et le réservoir 9 en manoeuvrant la vanne $6_a$, de sorte que de la résine sous forme H arrive par les conduits $7_a$ et $5_a$ dans le réservoir 1, cependant que l'agitateur $2_a$ fonctionne. Lorsqu'un certain temps s'est écoulé, le pH du lait dans le récipient 1 est voisin 5,0. On ouvre la vanne $4_a$ et l'ensemble du lait à pH voisin de 5,0 et des résines en suspension dans celui-ci s'écoule par le conduit $3_a$ et arrive sur le crible 11. Les résines constituent le refus de ce crible et sont aspirées par une pompe 44 et un conduit 45 se divisant en une branche 46 et en une branche 47 aboutissant respectivement au sommet des réservoirs 9 et 10. A ce stade de fonctionnement, les résines sont envoyées par la branche 46 au sommet du réservoir 9 qui s'est vidé de ses résines sous forme de H, la communication entre le réservoir 9 et le récipient 1 ayant été interrompue dès que ce réservoir a été vidé.

Le lait pénètre dans la chambre 14, passe par le conduit 15, est aspiré par la pompe 16, et arrive par le conduit 17 dans le bac 18, puis par le conduit 19 dans le bac 20. De là, par le conduit 21, il est réchauffé par le dispositif 22, dégazé par le dispositif 24, et coagulé dans le tube 26 de coagulation. On obtient, dans le conduit 28, un mélange de caillebotte et de sérum. Le sérum passe par le conduit 36, le séparateur 37 et le conduit 38, pour aller dans le réservoir 10 où se trouve de la résine à régénérer, la vanne 40 interdisant le passage de l'acide dans le réservoir 9. Lorsque la résine se trouvant dans le réservoir 10 est régénérée, on modifie la position de la vanne 40, de telle sorte que le sérum acide arrive alors dans le réservoir 9. Le réservoir 10 est prêt à jouer le même rôle que le réservoir 9 au début du fonctionnement.

Cette installation permet donc d'économiser de l'acide. Il s'est révélé en outre que la tour de lavage pouvait, dans cette installation, avoir des dimensions moindres pour une même capacité que celles qu'elle doit avoir dans les installations classiques de caséinerie ne mettant pas en oeuvre de résines cationiques pour l'acidulation du lait écrémé.

Les exemples suivants illustrent l'invention:

Exemple 1

On met 1 litre de lait écrémé ayant un pH de 6,6 dans un bêcher en verre muni d'un agitateur à barreau magnétique d'un pH mètre. On ajoute à 4°C progressivement 10 ml de résine Lewatit S100 ayant une granulométrie de 0,4 à 0,98 mm, jusqu'à ce que le pH du lait s'abaisse à 5,0, ce qui se produit après 2 à 3 minutes. On sépare le lait acidulé des résines et on l'acidule par HCl dilué jusqu'à floculation. On poursuit la préparation de la caséine à la manière classique. Le taux d'alcalinité des cendres du sérum est de 480 mg de $Na_2CO_3$ par gramme de cendre.

Exemple 2

On reprend l'exemple 1, mais en opérant à 50°C. L'abaissement du pH à 5,0 s'effectue en 4 minutes.

Exemple 3

Dans une cuve de 1000 litres de lait écrémé agité par un agitateur tournant à 5 à 6 tours par minute, on envoie de l'air en surface par intermittence et l'on introduit 50 litres de résine Duolite. La granulométrie est comprise entre 0,5 et 1 mm. La durée d'obtention d'un pH de 4,9 est de 4 à 5 minutes.

**0 004 231**

## Revendications

1. Procédé d'acidulation du lait en deux stades qui consiste à effectuer un premier stade d'acidulation en mettant le lait en contact avec une résine cationique sous forme H, jusqu'à obtention d'un pH encore supérieur à celui où se produit la floculation du lait, caractérisé en ce qu'il consiste à agiter la résine cationique dans le lait pendant le premier stade et, après obtention dudit pH supérieur, à séparer la résine du lait, puis, en un second stade d'acidulation, à aciduler par un acide en solution le lait séparé jusqu'à floculation.

2. Procédé suivant la revendication 1, caractérisé en ce qu'il consiste à mettre la résine cationique en suspension dans le lait.

3. Procédé suivant la revendication 1 ou 2, caractérisé en ce qu'il consiste à aciduler le lait par la résine jusqu'à obtention d'un pH du lait compris entre 4,9 et 5,0.

4. Procédé suivant l'une des revendications 1 à 3, caractérisé en ce qu'il consiste à utiliser des billes de résine ayant une densité voisine de celle du lait.

5. Lactosérum, obtenu par le procédé selon la revendication 1, ayant une proportion pondérale en matière minérale inférieure à 9%, et de préférence comprise entre 8 et 9%, une proportion pondérale en chlorures, exprimée en NaCl, inférieure à 3,5%, une proportion pondérale en calcium comprise entre 1,5% et 2%, une acidité Dornic inférieure à 40°, caractérisé en ce qu'il a une proportion pondérale, en l'ensemble sodium, potassium, calcium, inférieure à 5% et une alcalinité des cendres inférieure à 300 mg de $Na_2CO_3$ par gramme de cendre.

## Patentansprüche

1. Verfahren zur Säuerung von Milch in zwei Schritten, welches darin besteht, einen ersten Schritt der Säuerung zu bewirken, indem die Milch mit einem kationischen Harz in H-Form in Berührung gebracht wird, bis zur Erreichung eines pH-Wertes, der noch höher als jener ist, bei dem die Ausflokkung der Milch geschieht, dadurch gekennzeichnet, daß es darin besteht, das kationische Harz in der Milch während des ersten Schrittes zu bewegen und nach Erreichung des genannten höheren pH-Wertes das Harz von der Milch zu trennen, sowie dann in einem zweiten Schritt der Säuerung die vom Harz getrennte Milch mittels einer gelösten Säure bis zur Ausflockung zu säuern.

2. Verfahren nach Anspruch 1, dadurch gekennzeichnet, daß es darin besteht, das kationische Harz in der Milch in Suspension zu bringen.

3. Verfahren nach Anspruch 1 oder 2, dadurch gekennzeichnet, daß es darin besteht, die Milch mittels des Harzes bis zur Erreichung eines pH-Werte der Milch zwischen 4,9 und 5,0 zu säuern.

4. Verfahren nach einem der Ansprüche 1 bis 3, dadurch gekennzeichnet, daß es darin besteht, Harzkügelchen zu verwenden, die eine der Dichte der Milch nahekommende Dichte besitzen.

5. Molke, erzeugt nach dem Verfahren gemäß Anspruch 1, mit einem Gewichtsanteil an Mineralstoff von weniger als 9%, vorzugsweise von mehr als 8%, einem Gewichtsanteil an Chloriden, ausgedrückt als NaCl, von weniger als 3,5%, einem Gewichtsanteil von Kalzium zwischen 1,5% und 2%, mit einem Dornic-Säuregrad unter 40°, dadruch gekennzeichnet, daß sie einen Gewichtsanteil an Natrium, Kalium, Kalzium von weniger als 5% und eine Aschen-Alkalität von weniger als 300 mg $Na_2CO_3$ pro Gramm Asche aufweist.

## Claims

1. Process for acidifying milk in two stages which comprises carrying out a first acidifying stage in which the milk is contacted with a cationic exchange resin in its H form until a pH value is obtained which is still higher than that at which flocculation of the milk takes place, characterized in that the cationic resin is agitated in the milk during the first stage and, after said higher pH has been obtained, the resin is separated from milk, and then, in a second acidifying stage, the separated milk is acidified by a solution of acid.

2. Process as claimed in claim 1, characterized in that the cationic resin is kept in suspension in the milk.

3. Process as claimed in claim 1 or 2, characterized in that the milk is acidulated with the resin until a pH value within the range of 4.9 to 5.0 is obtained.

4. Process as claimed in any one of claims 1—3, characterized in that balls of resin with a specific gravity in the neighbourhood of that of milk are used.

5. Milk whey whenever prepared by the process as claimed in claim 1 wherein the mineral content is less than 9% by weight and preferably from 8 to 9%, the chloride content is less than 3.5% by weight expressed as NaCl, the calcium content is from 1.5 to 2% by weight and the Dornic acidity is lower than 40°, characterized in that the total sodium, potassium and calcium content is less than 5% by weight and the ash alkalinity is less than 300 mg of $Na_2CO_3$ per gram of ash.

7

FIG.1

FIG.2

1

FIG.3